Europäisches Patentamt

European Patent Office

Office européen des brevets

(19)

(11) Publication number: **0 124 224**
A2

# (12) EUROPEAN PATENT APPLICATION

(21) Application number: **84301695.7**

(22) Date of filing: **13.03.84**

(51) Int. Cl.³: **G 01 B 11/06**

(30) Priority: **01.04.83 US 481275**

(43) Date of publication of application: **07.11.84**
**Bulletin 84/45**

(84) Designated Contracting States: **DE FR GB NL**

(71) Applicant: **THERMA-WAVE INC., 47734 Westinghouse Drive, Fremont California 94539 (US)**

(72) Inventor: **Rosencwaig, Allan, 134 Timberline Court, Danville California 94526 (US)**
Inventor: **Opsal, Jon, 2295 Norwood Road, Livermore California 94550 (US)**

(74) Representative: **Jackson, David Spence et al, REDDIE & GROSE 16, Theobalds Road, London, WC1X 8PL (GB)**

(54) Method and apparatus for thin film thickness measurement.

(57) To measure thin film thickness with thermal waves, heating and detection laser beams are focused onto the film at an inspection site (18). The two laser beams are normal to the surface of the film, and are parallel and non-coaxial with one another. The heating beam from an Argon laser (10) is modulated at over 10,000 Hz and focused by an objective (16) onto the film.

A probe beam from an HeNelaser (20) is reflected by a dichroic mirror (28) to the objective (16). Probe beam light reflected from the thin film returns towards the HeNelaser (20) but is reflected by polarising beam splitter (24) through an HeNefilter (30) to a bicell detector (32) from which signals indicative of deflection at the thin film are supplied to a computer (not shown) for processing to determine the thickness of the thin film.

0124224

## METHOD AND APPARATUS FOR THIN FILM THICKNESS MEASUREMENT

This invention relates to a method and an apparatus for measuring the thickness of a thin film.

Background of Invention

It is well known from photoacoustic theory (A Rosencwaig and A Gersho, Journal of Applied Physics, Vol 47, Page 64 (1976) and A Rosencwaig, Photoacoustics and Photoacoustic Spectroscopy, Wiley, Interscience, New York, 1980) that information about the thermal characteristics of a sample as a function of depth beneath its surface can be obtained from thermal waves. Although there has been some experimentation in thermal-wave depth-profiling, (M J Adams and G F Kirkbright, Analyst, Vol 102, page 678 (1977) and A Rosencwaig, Journal of Applied Physics, Vol 49, page 2905 (1978)), thermal-wave depth profiling has not been extensively exploited, primarily because of the lack of adequate theoretical models. However, a recent model described by J Opsal and A Rosencwaig, in Journal of Applied Physics, Vol 53, page 4240 (1982) (hereinafter referred to as the O-R model) shows how depth-profiling and multi-layer thickness analysis can be performed from thermal-wave measurements using either surface temperature or thermo-acoustic probes. There are also several experimental difficulties, for example, operation outside a photoacoustic cell, a completely contactless method for thermal-wave generation and detection, and effecting thickness measurements with high spatial resolution, this last requirement necessitating the use of high-frequency (>100kHz) thermal waves.

It is an object of the present invention to overcome all three difficulties by employing a laser deflection technique whereby one laser is used for generating and another for detecting the thermal waves. In the present invention, heating and probe laser beams are focused and directed normal to the sample surface where they are slightly spaced apart. This is quite different from the conventional optical beam deflection technique where the probe beam skims over the surface of the sample as described by W B Jackson, N M Amer, A C Boccara and D Fournier, in Journal of Applied Optics, Vol 20, page 1333 (1981) and by J C Murphy and L C Aamodt, in Applied Physics Letters, Vol 38, page 196 (1981).

According to one aspect of the present invention, there is provided a method of measuring the thickness of a thin film comprising: focusing a heating laser beam on a incident spot on one side of the film with the beam normal to the surface of the film; modulating the heating laser beam at a frequency exceeding 10,000 cycles per second; focusing a probe laser beam on the film with the probe beam laterally spaced from the heating laser beam; and measuring the deflection of the probe laser beam reflected from the film, characterised in that the probe beam is parallel to the heating laser beam.

Preferably, the method is characterised further by the addition of the step of modifying the measurement to compensate for thermal air lens effects, thermal film lens effects, and optical absorption length.

According to another aspect of the invention there is provided apparatus for measuring the thickness of a thin film comprising: an inspection station adapted to receive a film to be measured with the film positioned in an inspection area; a heating laser having an output beam; modulator means for modulating the output beam of the heating laser at a frequency greater than 10,000 cycles per second; a probe laser having an output beam; and measuring means for measuring the deflection of the probe laser beam; characterised by optical means for focusing the output beams of the heating laser and probe laser at the inspection area along parallel, non-coaxial paths; and optical means for transmitting the probe laser beam reflected from the inspection area to the measuring means.

Other features and advantages of the invention will become apparent from the following description read in conjunction with the attached drawings in which:

Fig 1 is a diagram of a preferred form of apparatus of this invention for practice of the method of this invention;

Fig 2 is a frequency/response curve indicating the performance of the invention under operational conditions;

Fig 3 is a diagram on a enlarged scale of the conditions at the inspection station of the apparatus of Fig 1;

Fig 4 is a thickness/amplitude plot showing performance results with the invention measuring aluminium films on silicon; and

Fig 5 is a similar thickness amplitude plot for a series of silicon dioxide on silicon films.

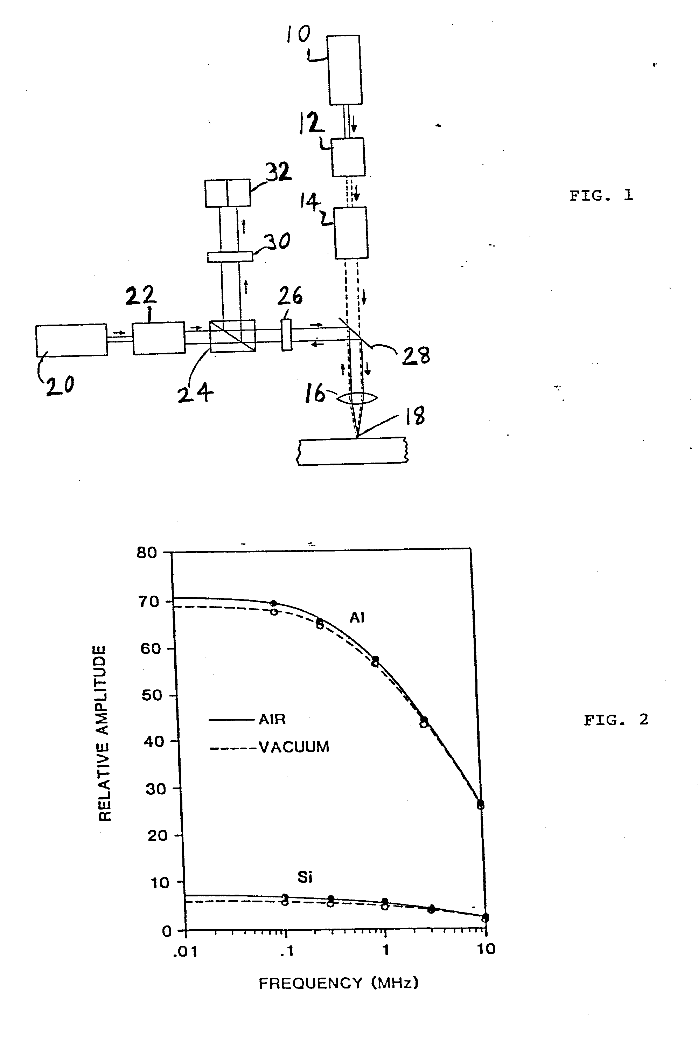

Fig 1 shows an embodiment of the invention in which heating apparatus includes a heating laser 10 which may be any convenient laser, such as a carbon dioxide laser or an argon laser, for example a Lexel Model 75 Argon laser. The output of the laser 10 passes through a modulator 12 which may take any suitable form, for example a modulator by Intra Action, Inc. The modulator 12 is operated at a frequency exceeding 10,000 cycles per second, for example, modulation frequencies between 10,000 cycles per second and 10,000,000 cycles per second. The modulated laser beam passes through a beam expander 14 formed of a suitable lens system, and then a microscope objective lens 16 to be focused on a spot in an inspection area 18 where the film under inspection is positioned.

Detection apparatus in the embodiment of Fig 1 includes a detection laser 20 which may take any suitable form, for example a Spectra Physics Model 120S helium/neon laser. The output beam of the detection laser 20 passes through a beam expander 22 and a polarizing splitter 24, and a quarter wave waveplate 26 to be reflected off a dichroic mirror 28 into the objective lens 16 and onto the inspection area 18. The optical elements are arranged so that the two focused laser beams are parallel but non-coaxial. With the particular examples described herein the two beams can be focused to spot sizes of between two and four microns with their center axes separated by approximately two microns. As explained hereinafter, the detection laser beam is reflected from the film being measured. The reflected beam is reflected from the dichroic mirror 28 and from the polarizing splitter 24 to a helium/neon filter 30 and a bicell detector 32.

The apparatus of Fig 1 can be operated for measurement of thin films of aluminium and silicon dioxide in the following way. The heating is provided from the $Ar^+$ ion laser whose beam is acousto-optically modulated at frequencies as high as 10MHz and with an incident peak power of approximately 30mW at the sample surface. The probe is an unmodulated 5mW He-Ne laser beam (2mW is incident on the sample surface) which is reflected off the sample surface and diverted by the polarizing beam splitter, in combination with the quarter-wave plate, onto a knife-edge (eg bicell photodiode) detector. The probe beam undergoes periodic deflection of the order of $10^{-5}$ to $10^{-4}$ radian by the thermal-wave induced changes in the local slope of the sample surface. This is analogous to the use of a laser probe for the detection of the surface acoustic waves, (see R L Whitman and A Korpel in Applied Optics, Vol 8, at page 1567 (1969)) although here the surface deformations are due to the thermal waves. At a 1MHz modulation frequency, changes in the local surface slope that result from local surface displacements of approximately $10^{-4}$Å $/\sqrt{Hz}$ can be detected, a sensitivity that is considerably greater than that reported in recent experiments done at much lower modulation frequencies with laser interferometry, (see S Ameri, E A Ash, V Neuman and C R Petts, in Electronics Letters, Vol 17, at page 337 (1981)).

However, to combine the O-R model with this laser probe technique to perform quantitative thin-film thickness measurements, it is necessary to extend the model to three dimensions and to include thermoelastic surface deformations. In addition to three dimensional effects, and thermoelastic deflections, it is found that thermal lens, optical effects, and nonlinear effects arising from the temperature dependence of the various material parameters must be taken into account.

The thermal lens effects (see W B Jackson, N M Amer, A C Bocarra and D Fournier, in Applied Optics, Vol 20, at page 1333 (1981); J C Murphy and L C Aamodt in Applied Physics Letters, Vol 38, at page 196 (1981) and R L Swofford, M E Long and A C Albrecht, in Journal of Chemical Physics, Vol 65, at page 179 (1979)) occur in the air above the sample surface and within any layer of the sample that is not optically opaque. Even though these thermal lenses have only micron-size dimensions at the high modulation frequencies employed, their refractive power is still considerable since the normalized refractive index gradient, $n^{-1}$ (dn/dx) = $n^{-1}$(dn/dT) (dT/dx) across the lens is now quite high and of the same order as the thermal expansion coefficient of a solid. Also, even though the probe laser beam is incident normal to the sample surface, it strikes the thermal lens off-axis and thus undergoes refraction in both incident and reflected directions. Consequently, the theory predicts, and it is found experimentally, that the thermal lens effect is appreciable for some materials such as Si.

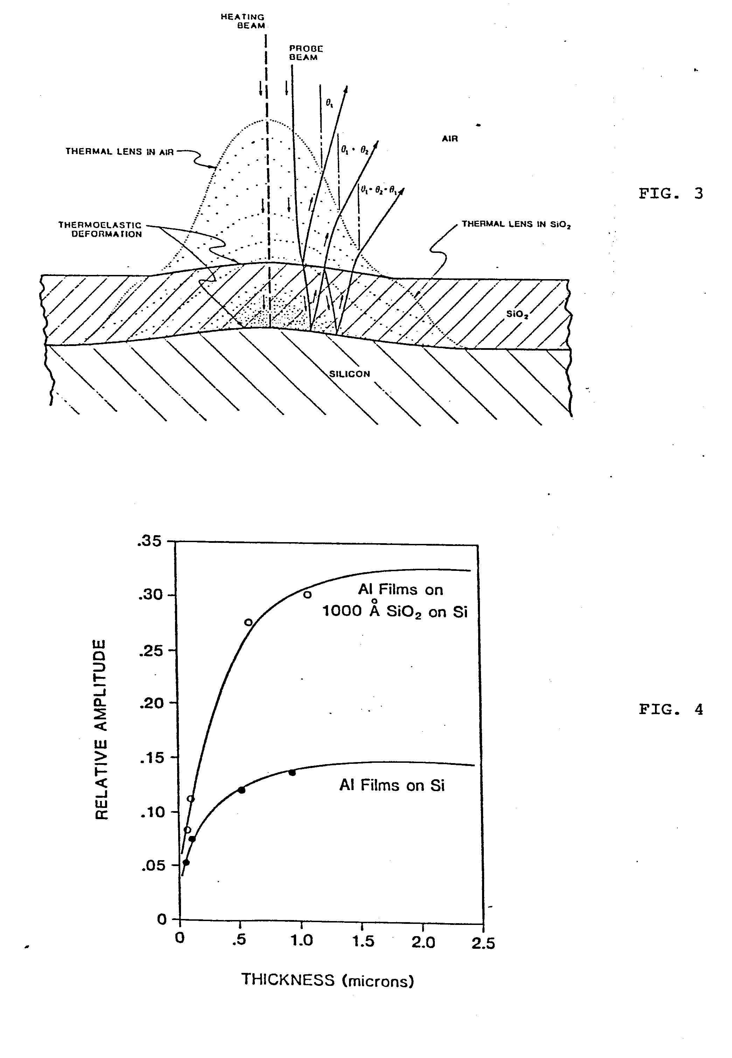

Fig 2 presents comparisons with experiments for a complete calculation which includes optical reflectivities, finite absorption depths and finite probe beam diameters, under vacuum, where there is no thermal lens effect (dashed curves), and in air (solid curves). The agreement between theory and experiment is close.

In these thermal-wave experiments DC and AC temperature excursions can range from 30°C to several hundred degrees depending on the sample's thermal characteristics. With such temperature excursions, the dependence on temperture of the various thermal, optical and elastic parameters has to be considered as well. In general, the most critical parameters appear to be the refractive index and the thermal conductivity. These temperature effects introduce appreciable nonlinearities in the model that cannot be neglected.

Optical effects will, of course, play an important role in these experiments as well. For example, in Si the optical absorption length ($\simeq$ 1μm) for the 488nm $Ar^+$ ion laser light must be taken into account. Absorption and reflectivities must also be included. In addition, when dealing with optically transparent films such as $SiO_2$, optical interference effects within the film have to be included as well.

Fig 3 schematically depicts the situation encountered for an $SiO_2$ film on Si. Here the thermoelastic deformations of both the Si-$SiO_2$ and the $SiO_2$-air surfaces, the thermal lenses in both the $SiO_2$ and the air, and the optical interference effect on the probe beam in the $SiO_2$ film are shown. Note that the thermal lenses have opposite signs in air and $SiO_2$ because of the opposite signs of their respective dn/dT's.

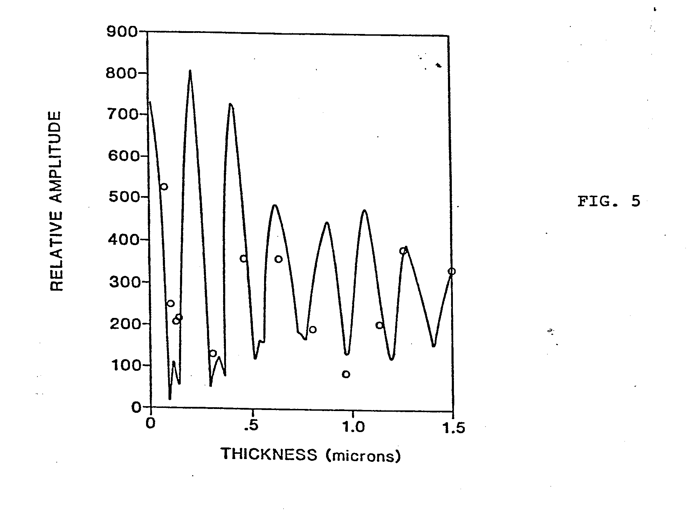

When all of the thermal lens, optical and nonlinear effects are properly included into the O-R model, the model can be used in measuring the thickness of thin films. This is illustrated in Fig 4 which shows theoretical curves and data obtained for single films of Al on Si and for double films of Al and $SiO_2$ on Si. The magnitude of the thermal-wave signal rather than the phase is used in these measurements, since the magnitude has a greater dynamic range and can be measured more precisely. The data in Fig 4 are in close agreement with the theory both for the single and the double film. The precision of the reading obtained with a 1-sec averaging time translates to a thickness sensitivity of $\pm 2\%$ over the thickness range of $500\overset{o}{A}$ - $25,000\overset{o}{A}$ for these films.

In Fig 5 the theoretical curves and the data for a series of transparent $SiO_2$ films on Si are shown. Although $SiO_2$ on Si is only a single film problem, the theory in this case must include thermoelastic deformations at both the Si-$SiO_2$ and $SiO_2$-air interfaces, thermal lens effects in both the $SiO_2$ and the air, and optical interference effects in the $SiO_2$ (see Fig 3). The fit between theory and experiment is, with all this complexity, quite good, indicating that transparent as well as opaque films can be measured with this thermal-wave technique. The thickness sensitivity for $SiO_2$ films on Si appears to be $\pm 2\%$ over the range $500\overset{o}{A}$ - $15,000\overset{o}{A}$ .

The bicell detector 32 is a split detector consisting of a photodetector having two sensing elements located side by side, separated by a divider only a few microns thick. Each sensing element generates an electrical signal based on the intensity of the light reaching that element. By comparing the outputs of the two sensing elements, variations due to the deflection of the beam can be determined. Any extraneous parameter, such as change in reflectivity in the sample, affects both elements of the detector equally. The output from the detector 22 is supplied to a computer (not shown) and processed as required to determine beam deflection and the thickness information derivable in accordance with the O-R model and the various effects referred to hereinbefore. Reference should also

- 7 -

0124224

be made to our copending European patent application no. 83304271.6, publication no. 0102730, which describes and claims a method for detecting thermal waves in a sample. A copy of the specification and drawings of European patent application no. 83304271.6 is filed with the present application.

## CLAIMS

1. A method of measuring the thickness of a thin film comprising:

focusing a heating laser beam on a incident spot on one side of the film with the beam normal to the surface of the film;

modulating the heating laser beam at a frequency exceeding 10,000 cycles per second;

focusing a probe laser beam on the film with the probe beam laterally spaced from the heating laser beam; and

measuring the deflection of the probe laser beam reflected from the film, the probe beam being parallel to the heating laser beam.

2. A method according to claim 1, characterised further by the addition of the step of modifying the measurement to compensate for thermal air lens effects, thermal film lens effects, and optical absorption lengths.

3. Apparatus for measuring the thickness of a thin film comprising:

an inspection station adapted to receive a film to be measured with the film positioned in an inspection area;

a heating laser (10) having an output beam; modulator means (12) for modulating the output beam of the heating laser (10) at a frequency greater than 10,000 cycles per second;

a probe laser (20) having an output beam; and measuring means (32) for measuring the deflection of the probe laser beam; there being optical means (14, 28, 16, 26, 22) for focusing the output beams of the heating laser (10) and probe laser (20) at the inspection area along parallel, non-coaxial paths; and optical means (24, 30) for transmitting the probe laser beam reflected from the inspection area to the measuring means (32).

0124224

FIG. 1

FIG. 2

FIG. 3

FIG. 4

0124224

3/3

FIG. 5